# EUROPÄISCHE PATENTSCHRIFT

(11) **EP 2 286 647 B1**
(45) Veröffentlichungstag und Bekanntmachung des Hinweises auf die Patenterteilung: **04.01.2017**
(21) Anmeldenummer: 10401135.8
(22) Anmeldetag: 12.08.2010
(51) Int. Cl.: A01B 49/06, A01C 7/20

(54) **Bestellkombination**
Agricultural machine combination
Machine agricole combinée

(30) Priorität: 20.08.2009 DE 102009043813
(43) Veröffentlichungstag der Anmeldung: 23.02.2011
(73) Patentinhaber: Amazonen-Werke H. Dreyer GmbH & Co. KG, 49205 Hasbergen (DE)
(72) Erfinder: Dutzi, Sven, 49205 Hasbergen (DE); Tiessen, Reimer Uwe, 26135 Oldenburg (DE); Pelikan, Jean, 78150 le Chesnay (FR)

(56) Entgegenhaltungen:
- EP-B1- 0 358 947
- WO-A1-99/39563
- WO-A1-2005/115124
- US-A- 2 556 072
- US-A1- 2002 162 492

## Beschreibung

Die Erfindung betrifft eine Bestellkombination.

Eine derartige Bestellkombination ist beispielsweise durch die EP 0 327 869 B2 bekannt. Diese Bestellkombination besteht aus einem Bodenbearbeitungsgerät und einer dem Bodenbearbeitungsgerät unmittelbar folgenden und das Bodenbearbeitungsgerät in der Bearbeitungstiefe führenden Nachlaufwalze. Durch die Nachlaufwalze wird der Boden zumindest in Teilbereichen rückverfestigt. Die Nachlaufwalze besteht aus reifenartigen Walzenelementen. Hinter der Nachlaufwalze sind Säschare angeordnet. Diese Säschare sind mittels Gelenkstreben an einem Querbalken der Bestellkombination angeordnet. Der Querbalken befindet sich hinter den Walzenelementen der Nachlaufwalze. Hierdurch baut die Bestellkombination insgesamt sehr lang. Auch befindet sich der Gesamtschwerpunkt der Bestellkombination somit in einem relativ großen Abstand zu den Kupplungselementen, mit denen die Bestellkombination an dem Dreipunktkraftheber eines Ackerschleppers angebaut ist. Hierdurch sind große Schlepper mit großen Hubkräften erforderlich, um die Bestellkombination auszuheben und ein sicheres Fahren zu ermöglichen.

Die EP0358947B1 offenbart ebenso eine Bestellkombination. Der Erfindung liegt die Aufgabe zugrunde eine Bestellkombination in kompakter Bausweise mit einem günstig, d.h. möglichst dicht am Schlepperkraftheber liegenden Gesamtschwerpunkt der Bestellkombination zu schaffen.

Diese Aufgabe wird erfindungsgemäß dadurch gelöst, dass die Säschare in den nicht von den Walzenelementen verfestigten Bereichen angeordnet sind, dass der Querbalken vor den Walzenelementen angeordnet ist, dass die Gelenkstreben für die Schare sich zumindest teilweise durch den Zwischenbereich zwischen den Walzenelementen erstrecken, dass den Säscharen jeweils Tiefenführungsräder zugeordnet sind, dass die Tiefenführungsräder sich über den Zwischenraum zwischen einander benachbarten Walzenelementen erstrecken und zumindest mit ihrem vorderen Bereich in den Zwischenbereich zwischen den Walzenelementen hineinerstrecken und den von den Walzenelementen nicht rückverfestigten Bereich rückverfestigen.

Infolge dieser Maßnahmen können die Halterungen und/oder die Schare in den Zwischenräumen zwischen den Walzenelementen hineingeschoben werden. Die den Scharen zugeordneten Tiefenführungsräder verdichten den von den Walzenelementen der Nachlaufwalze nicht verdichteten Bereich. Somit wird durch das Zusammenwirken der Walzenelemente der Nachlaufwalze und den Tiefenführungsrädern eine Verdichtung bzw. Rückverfestigung des Ackerbodens über die gesamte Arbeitsbreite der Bestellkombination erreicht. Durch das Hineinschieben der Halterungen und der Säschare in den Bereich zwischen dem Walzenelementen wird die Länge der Kombination erheblich reduziert und der Gesamtschwerpunkt der Bestellkombination in Richtung des Dreipunktkrafthebers des Schleppers bzw. der Anlenkpunkte der Bestellkombination an dem Dreipunktkraftheber verlagert. Es ergibt sich somit eine kompakt bauende Bestellkombination mit günstiger Gesamtschwerpunktlage.

In vorteilhafter Weise lässt sich der Saatgutvorratsbehälter oberhalb des Bodenbearbeitungsgerätes und vor der Nachlaufwalze anordnen. Hierdurch wird die günstige Schwerpunktlage der Bestellkombination unterstützt.

Bei einer Bestellkombination, bei welcher die Verteilmaschine der Bestellkombination zusätzlich eine Düngerverteilmaschine mit Düngervorratsbehälter und mehrere beabstandet zueinander angeordnete Düngerschare aufweist, ist vorgesehen, dass die Düngerschare sich zumindest teilweise in dem Zwischenbereich zwischen den Walzenelementen befinden.

Eine günstige Schwerpunktlage der Gesamtkombination ergibt sich dadurch, dass der Dünger- und/oder Saatgutvorratsbehälter sich jeweils oberhalb des Bodenbearbeitungsgerätes und vor der Nachlaufwalze befinden.

In einer Ausführungsform ist vorgesehen, dass der Düngerbehälter im Frontanbau an die die Bestellkombination ziehenden Ackerschleppers angeordnet ist.

Um eine besonders gute Verdichtungsarbeit von Walzenelementen und Tiefenführungsrädern zu erreichen, ist vorgesehen, dass die Tiefenführungsräder der Säschare sich zumindest um das Maß der Flankenhöhe der Tiefenführungsräder in den Zwischenraum zwischen den Walzenelementen hineinerstrecken.

Um auch Schlepper mit geringer Hubkraft zum Ziehen der Bestellkombination einsetzen zu können, ist vorgesehen, dass die Bestellkombination als gezogenes Gerät ausgebildet ist und eine Zugvorrichtung und ein Fahrwerk aufweist, dass zumindest einige de Walzenelemente als Fahrwerkselemente ausgebildet sind. Hierdurch können ohne spezielle Laufräder eines Fahrwerkes trotzdem die Vorteile eines Fahrwerkes genutzt werden, in dem einige der Walzenelemente die Fahrwerkselemente bilden. Auch dieses trägt zu einer kompakten Bauweise der Bestellkombination bei.

Bei Bestellkombinationen, deren Seitenrahmen einklappbar sind, ist vorgesehen, dass in der Mitte der Bestellkombination zwischen den den jeweiligen Seitenrahmen zugeordneten Nachlaufwalzen ein schmales Mittelwalzenelement an dem Tragrahmen angeordnet ist. Hierdurch ergibt sich eine vorteilhafte Ausgestaltung der Nachlaufwalze mit der Möglichkeit, das schmale Mittelwalzenelement als Fahrwerkselement zu nutzen, somit ist also das Mittelwalzenelement als Transportstützrad ausgestaltet.

Um ein gutes Fahrverhalten der Bestellkombination mit dem als Transportstützrad wirkenden Mittelwalzenelement in der Transportfahrt zu erreichen, ist vorgesehen, dass das Mittelwalzenelement mit einer eine aufrechten Schwenkachse aufweisenden Haltevorrichtung an dem Tragrahmen angeordnet und um diese Achse zumindest in eingeklappter Position der Seitenrahmen frei schwenkbar ist. Hierdurch wird das Mittelwalzenelement schwenkbar aufgehängt und kann Lenkbewegungen des Schleppers folgen. In vorteilhafter Weise ist zur beweglichen Aufhängung des Mittelwalzenelementes vorgesehen, dass das Mittelwalzenelement mittels einer Pendelradaufhängung an dem Seitenrahmen angeordnet ist.

Um über das Mittelwalzenelement die Bestellkombination zumindest unterstützend ausbilden zu können, ist vorgesehen, dass das Mittelwalzenelement mittels einer motorischen Stellvorrichtung in Höhenrichtung gegenüber dem Tragrahmen verstellbar angeordnet ist.

Um während der Bestellarbeit eine gute Verdichtungsarbeit des Mittelwalzenelementes, welches als Transportstützrad dient und mittels einer Pendelradaufhängung aufgehängt ist, zu gewährleisten, ist vorgesehen, dass der Pendelradaufhängung eine Verriegelungseinrichtung zugeordnet ist, mittels welcher das Mittelwalzenelement in Arbeitsstellung der Seitenrahmen verriegelbar ist.

Weitere Einzelheiten der Erfindung sind der Beispielsbeschreibung und den Zeichnungen zu entnehmen. Hierbei zeigen
- Fig. 1: die Bestellkombination in perspektivischer Darstellung,
- Fig. 2: die Bestellkombination in der Draufsicht,
- Fig. 3: die Bestellkombination in der Ansicht gemäß Fig. 1, wobei das in Fahrtrichtung linke äußere Walzenelement nicht dargestellt ist,
- Fig. 4: die Bestellkombination nach Fig. 3 in Seitenansicht,
- Fig. 5: eine weitere Bestellkombination, jedoch größerer Arbeitsbreite mit zwei einklappbaren Seitenteilen und Düngerfronttank in Arbeitsstellung und perspektivischer Darstellung,
- Fig. 6: die Bestellkombination gemäß Fig. 5 in Transportstellung, in perspektivischer Darstellung,
- Fig. 7: die Bestellkombination gemäß Fig. 6 in Seitenansicht und
- Fig. 8: die Bestellkombination gemäß den Fig. 6 und 7 in der Ansicht von hinten.

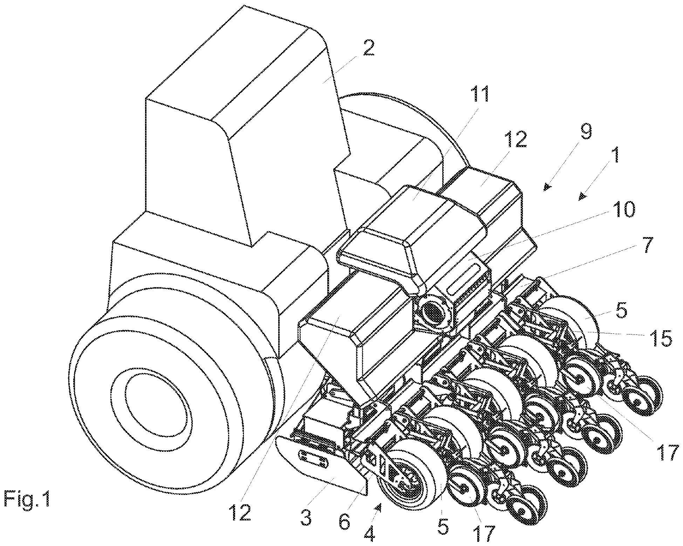

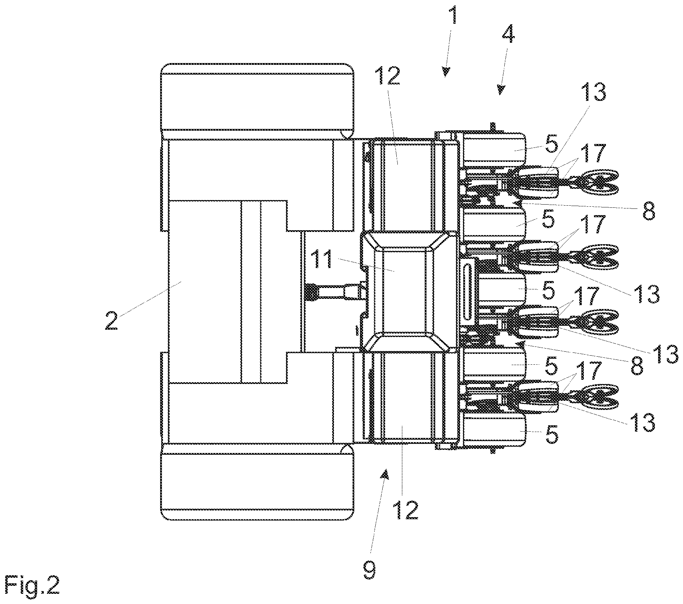

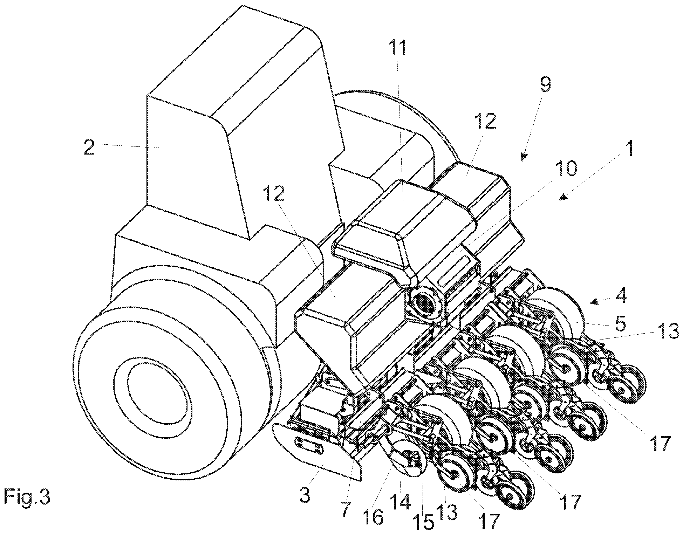

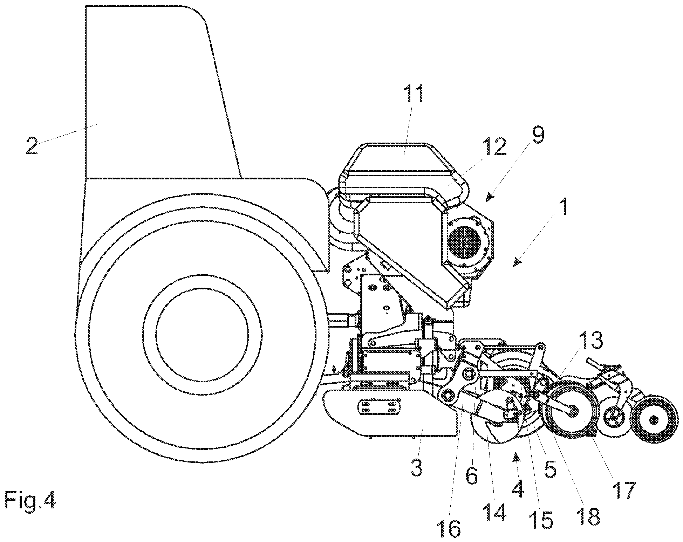

Die Bestellkombination 1 gemäß den Fig. 1 bis 4 ist hinter einem nur schematisch mit dem Rückteil dargestellten Ackerschlepper 2 an dessen Dreipunktkraftheber angebaut. Die Bestellkombination 1 besteht aus dem als Kreiselegge 3 ausgebildeten Bodenbearbeitungsgerät und der dem Bodenbearbeitungsgerät unmittelbar folgenden Nachlaufwalze 4. Die Nachlaufwalze 4 führt das Bodenbearbeitungsgerät 3 in der Bearbeitungstiefe. Hierzu ist die Nachlaufwalze 4 mit entsprechenden Halterungen und Tiefeneinstellelementen mit dem Bodenbearbeitungsgerät in bekannter Weise verbunden.

Die Nachlaufwalze 4 weist die beabstandet zueinander angeordneten reifenartigen Walzenelemente 5 auf, welche über Haltearme an dem Querbalken der Nachlaufwalze 4 befestigt sind.

Wie bereits erwähnt, sind die Walzenelemente der Nachlaufwalze 4 beabstandet zueinander angeordnet und weisen einen Zwischenraum 8 zueinander auf. Die Walzenelemente 5 verfestigen den Boden streifenweise, so dass der Boden in Teilbereichen rückverfestigt wird.

Die Bestellkombination 1 weist weiter eine Verteilmaschine 9 auf. Diese Verteilmaschine 9 ist im Ausführungsbeispiel als Einzelkornsämaschine mit dem Vereinzelungsorgan 10 und Saatgutbehälter 11 sowie einer Düngerverteilmaschine mit Düngervorratsbehälter 12 und zugeordneten Dosierorganen ausgestattet.

In dem Zwischenraum 8 zwischen den Walzenelementen 5 bzw. in Fahrtrichtung gesehen mit diesem Zwischenräume 8 fluchtend sind die einzelnen Scharelemente 13 und 14 der Verteilmaschine 9 angeordnet.

Die Säschare 13 und die Düngerschare 14 der Schareinheiten befinden sich in den nicht von den Walzenelementen 5 verfestigten Bereichen.

Der Querbalken 7, an dem sowohl die Walzenelemente 5 wie auch die Säschare 13 und 14 mittels ihrer Gelenkstreben 15 und 16 angeordnet sind, befindet sich vor den Walzenelementen 5.

Die Gelenkstreben 15 und 16 für die Schare 13 und 14 erstrecken sich zumindest teilweise durch den Zwischenbereich 8 zwischen den Walzenelementen 5, wie die Zeichnungen zeigen.

Die Düngerschare 14 befinden sich zumindest teilweise in dem Zwischenbereich 8 zwischen den Walzenelementen 5. Weiterhin erstrecken sich die Gelenkstreben 15, 16, die die Schare 13, 14 tragen, durch den Zwischenbereich 8 zwischen den Walzenelementen 5. Den Säscharen 13 sind jeweils Tiefenführungsräder 17 zugeordnet. Diese Tiefenführungsräder 17 erstrecken sich quer zur Fahrtrichtung gesehen zumindest annähernd über den Zwischenraum 8 zwischen den einander benachbarten Walzenelementen 5, so dass sie den Zwischenbereich 8 zwischen den Walzenelementen 5 rückverfestigen und hier die Aufgabe der Walzenelemente 5 der Nachlaufwalze 4 übernehmen, so dass der gesamte Arbeitsbereich von den Walzenelementen 5 in Verbindung mit den Tiefenführungsrädern 17 rückverfestigt wird.

Die Tiefenführungsräder 17, die den Säscharen 13 zugeordnet sind, erstrecken sich zumindest um das Maß der Flankenhöhe der Reifen 18 der Tiefenführungsräder 17 in den Zwischenraum 8 zwischen den Walzenelementen 5 hinein.

Die Dünger- 12 und Saatgutvorratsbehälter 11 befinden sich jeweils oberhalb des Bodenbearbeitungsgerätes 3 und vor der Nachlaufwalze 4.

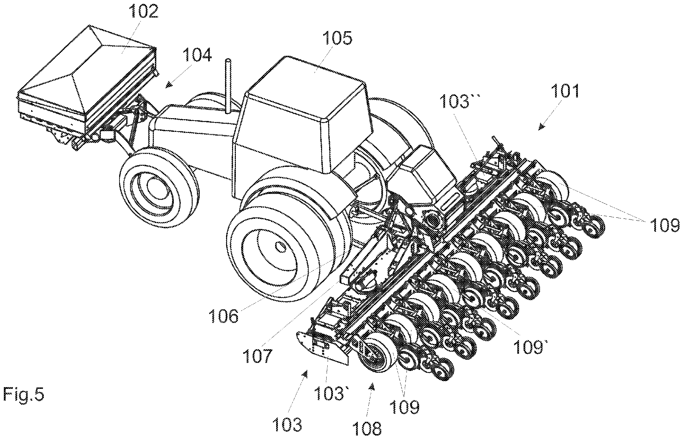

Die in den Fig. 5 bis 8 dargestellte Bestellkombination 101 unterscheidet sich von der Bestellkombination 101 gemäß den Fig. 1 bis 4 dadurch, dass der Düngerbehälter 102 nicht oberhalb des Bodenbearbeitungsgerätes 103, sondern im Frontanbau an den Frontkraftheber 104 des Ackerschleppers 105 angeordnet ist. Weiterhin weist das Bodenbearbeitungsgerät 103 einen zentralen Tragrahmen 106 auf, der über Kupplungselemente an den Dreipunktkraftheber des Ackerschleppers 105 angeordnet ist. An diesem zentralen Tragrahmen 106 sind die Seitenrahmen 107 des in zwei Teilbereichen 103' und 103" unterteilten Bodenbearbeitungsgerätes 103 schwenkbar angeordnet. An jedem Teilbereich 103' und 103" des Bodenbearbeitungsgerätes 103 ist ein Teilbereich 108' und 108" der Nachlaufwalze 108 angeordnet. Der Aufbau der Nachlaufwalze 108 mit den beabstandet zueinander angeordneten Walzenelementen 109 und den zugeordneten Scharen 110 und 111 entspricht der Anordnung gemäß den Fig. 1 bis 4.

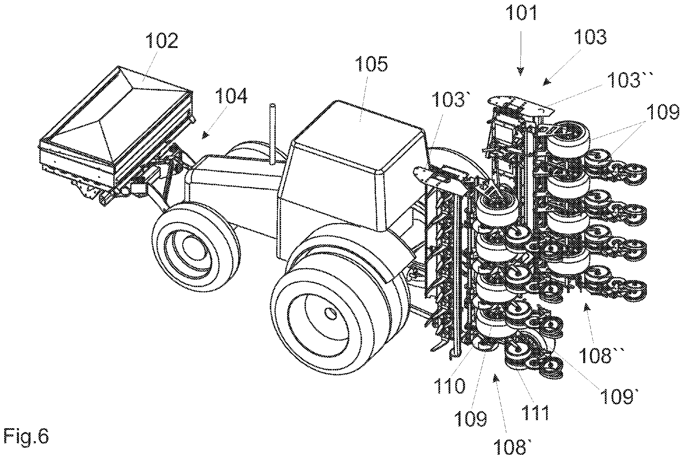

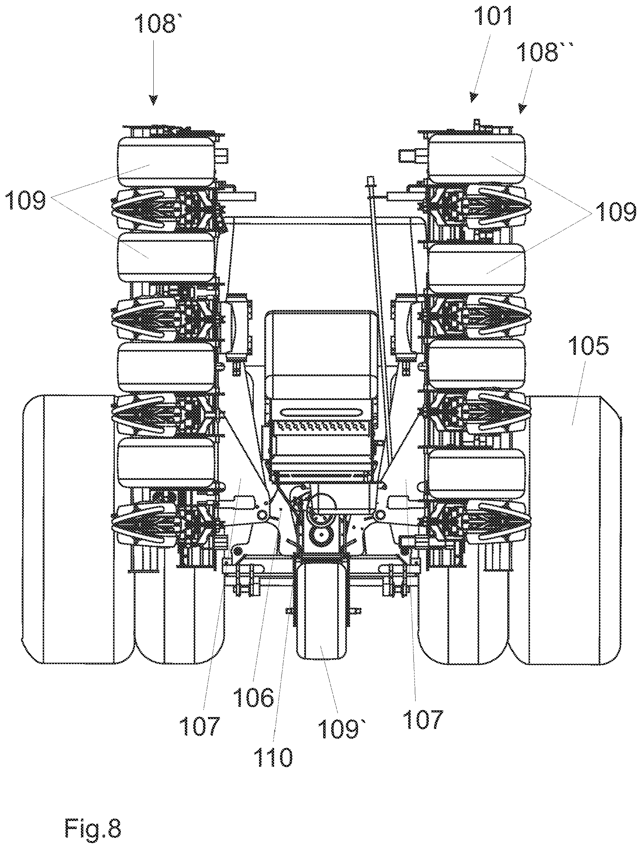

Die Bestellkombination 101, die in Fig. 5 in Arbeitsstellung dargestellt ist, ist in die in die Fig. 6 bis 8 dargestellte Transportstellung zu verschwenken. Hierbei weist die Bestellkombination 101 zwischen den den jeweiligen Seitenrahmen 107 zugeordneten Nachlaufwalzen 108' und 108" ein schmales Mittelwalzenelement 109' auf, wie insbesondere der Fig. 8 zu entnehmen ist. Dieses schmale Mittelwalzenelement 109' ist über eine separate Halterung 110 an dem Tragrahmen 106 befestigt. Während die anderen Walzenelemente 109 der Nachlaufwalze 108 an den Seitenrahmen 107 befestigt sind.

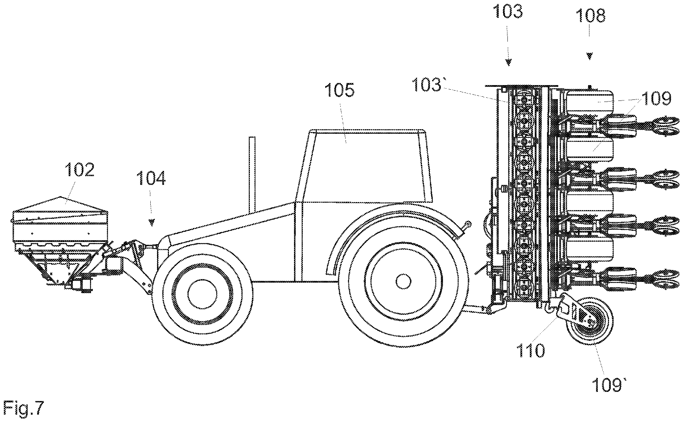

Das Mittelwalzenelement 109' ist in der Transportstellung der Bestellkombination 101 als Transportstützrad ausgebildet, wie insbesondere die Fig. 7 und 8 zeigen. Das Mittelwalzenelement 109' ist mit einer nicht im einzelnen dargestellten, eine aufrechte Schwenkachse aufweisenden Haltevorrichtung 110 an dem Tragrahmen 106 angeordnet und um diese Achse zumindest in eingeklappter Position der Seitenrahmen 107 gemäß den Fig. 6 bis 8 frei schwenkbar. Dieses Mittelwalzenelement 109', welches als Transportstützrad dient, stützt zusätzlich die Bestellkombination 101 gegenüber dem Boden ab, so dass das gesamte Gewicht der Bestellkombination 101 in ausgehobener Position nicht von dem Schlepper 105 bzw. von der Dreipunktkupplung getragen werden muss.

In nicht dargestellter Weise ist das Mittelwalzenelement109' mit der vorbeschriebenen Pendelausrüstung an dem Mittelrahmen 106 angeordnet. Das Mittelwalzenelement 109' ist mittels nicht dargestellter motorischer Stellvorrichtungen in Höhenrichtung gegenüber dem Tragrahmen 106 verstellbar angeordnet, so dass das Transportstützrad 109' in die entsprechende Position in der Transportstellung und in die Arbeitsstellung gebracht werden kann.

In nicht dargestellter Weise ist der Pendelradaufhängung eine Verriegelungseinrichtung zugeordnet, mittels welcher das Mittelwalzenelement 109' in Arbeitsstellung gegenüber dem Seitenrahmen 107 und Tragrahmen 106 verriegelbar ist.

## Patentansprüche

1. Bestellkombination bestehend aus einem Bodenbearbeitungsgerät und einem dem Bodenbearbeitungsgerät unmittelbar folgenden und das Bodenbearbeitungsgerät in der Bodenbearbeitungstiefe führenden und dem Boden zumindest im Teilbereichen rückverfestigenden, vorzugsweise reifenartigen Walzenelemente aufweisenden Nachlaufwalze und zumindest einer zugeordneten, vorzugsweise als (Einzelkorn-) Sämaschine ausgebildeten Verteilmaschine mit zumindest einem Saatgutvorratsbehälter und mehreren beabstandet zueinander angeordneten Säscharen, wobei die Walzenelemente beabstandet zueinander angeordnet sind, wobei die Säschare mittels Gelenkstreben an zumindest einem Querbalken der Bestellkombination angeordnet sind, wobei die Schare (13,14,111) in den nicht von den Walzenelementen (5,109,109') verfestigten Bereichen angeordnet sind, wobei der Querbalken (7) vor den Walzenelementen (5,109,109') angeordnet ist, wobei die Gelenkstreben (15,16) für die Schare (13,14) sich zumindest teilweise durch den Zwischenbereich (8) zwischen den Walzenelementen (5,109,109') erstrecken, **dadurch gekennzeichnet, dass** den Säscharen (13) jeweils Tiefenführungsräder (17) zugeordnet sind, dass die Tiefenführungsräder (17) sich über den Zwischenraum (8) zwischen einander benachbarten Walzenelementen (5,109,109') erstrecken und zumindest mit ihrem vorderen Bereich in den Zwischenbereich (8) zwischen den Walzenelementen (5,109,109') hineinerstrecken und den von den Walzenelementen (5,109,109') nicht rückverfestigten Bereich rückverfestigen.

2. Bestellkombination nach Anspruch 1, **dadurch gekennzeichnet, dass** der Saatgutvorratsbehälter (11) sich oberhalb des Bodenbearbeitungsgerätes (3) und vor der Nachlaufwalze (5) befindet.

3. Bestellkombination nach Anspruch 1, wobei die Verteilmaschine zusätzlich eine Düngerverteilmaschine mit Düngervorratsbehälter und mehreren beabstandet zueinander angeordneten Düngerscharen (14) aufweist, **dadurch gekennzeichnet, dass** die Düngerschare (14) sich zumindest teilweise in dem Zwischenbereich (8) zwischen den Walzenelementen (5) befinden.

4. Bestellkombination nach Anspruch 3, **dadurch gekennzeichnet, dass** der Dünger- und Saatgutvorratsbehälter (12,11) sich jeweils oberhalb des Bodenbearbeitungsgerätes (3) und vor der Nachlaufwalze (4) befinden.

5. Bestellkombination nach Anspruch 1, **dadurch gekennzeichnet, dass** der Düngerbehälter (102) im Frontanbau an die die Bestellkombination (101) ziehenden Ackerschleppers (105) angeordnet ist.

6. Bestellkombination nach Anspruch 1, **dadurch gekennzeichnet, dass** die Tiefenführungsräder (17) der Säschare (13) sich zumindest um das Maß der Flankenhöhe der Reifen (18) der Tiefenführungsräder (17) in den Zwischenraum (8) zwischen den Walzenelementen hineinerstrecken.

7. Bestellkombination nach Anspruch 1, **dadurch gekennzeichnet, dass** die Bestellkombination als gezogenes Gerät ausgebildet ist und eine Zugvorrichtung und ein Fahrwerk aufweist, dass zumindest einige de Walzenelemente als Fahrwerkselemente ausgebildet sind.

8. Bestellkombination nach Anspruch 1, **dadurch gekennzeichnet, dass** in der Mitte der Bestellkombination (101) zwischen den den jeweiligen Seitenrahmen (107) zugeordneten Nachlaufwalzen (108) ein schmales Mittelwalzenelement (109') an dem Tragrahmen (106) angeordnet ist.

9. Bestellkombination nach Anspruch 8, **dadurch gekennzeichnet, dass** das Mittelwalzenelement (109') als Transportstützrad ausgebildet ist.

10. Bestellkombination nach einem oder mehreren der vorstehenden Ansprüche, **dadurch gekennzeichnet, dass** das Mittelwalzenelement (109') mit einer eine aufrechten Schwenkachse aufweisenden Haltevorrichtung (110) an dem Tragrahmen (106) angeordnet und um diese Achse zumindest in eingeklappter Position der Seitenrahmen frei schwenkbar ist.

11. Bestellkombination nach Anspruch 8, **dadurch gekennzeichnet, dass** das Mittelwalzenelement (109') mittels einer Pendelradaufhängung an dem Seitenrahmen angeordnet ist.

12. Bestellkombination nach einem oder mehreren der vorstehenden Ansprüche, **dadurch gekennzeichnet, dass** das Mittelwalzenelement (109') mittels einer motorischen Stellvorrichtung in Höhenrichtung gegenüber dem Tragrahmen verstellbar angeordnet ist.

13. Bestellkombination nach einem oder mehreren der vorstehenden Ansprüche, **dadurch gekennzeichnet, dass** der Pendelradaufhängung eine Verriegelungseinrichtung zugeordnet ist, mittels welcher das Mittelwalzenelement (109') in Arbeitsstellung der Seitenrahmen verriegelbar ist.

## Claims

1. Combined agricultural device consisting of a soil cultivation implement and a trailing roller, which directly follows the soil cultivation implement and guides the soil cultivation implement at the soil cultivation depth and re-compacts the soil at least in partial regions and preferably has tyre-like roller elements, and at least one associated distribution machine which is preferably designed as a (single grain) seeder and has at least one seed storage container and a plurality of sowing coulters arranged spaced apart from one another, wherein the roller elements are arranged spaced apart from one another, wherein the sowing coulters are arranged on at least one crossbar of the combined agricultural device by means of articulated struts, wherein the coulters (13, 14, 111) are arranged in the regions not compacted by the roller elements (5, 109, 109'), wherein the crossbar (7) is arranged upstream of the roller elements (5, 109, 109'), wherein the articulated struts (15, 16) for the coulters (13, 14) at least partially extend through the intermediate region (8) between the roller elements (5, 109, 109'), **characterized in that** the sowing coulters (13) are each assigned depth-guiding wheels (17), **in that** the depth-guiding wheels (17) extend over the intermediate space (8) between mutually adjacent roller elements (5, 109, 109') and extend, at least with their front region, into the intermediate region (8) between the roller elements (5, 109, 109') and re-compact the region not re-compacted by the roller elements (5, 109, 109').

2. Combined agricultural device according to Claim 1, **characterized in that** the seed storage container (11) is located above the soil cultivation implement (3) and upstream of the trailing roller (5).

3. Combined agricultural device according to Claim 1, wherein the distribution machine additionally has a fertilizer distribution machine with a fertilizer storage container and a plurality of fertilizer coulters (14) which are arranged spaced apart from one another, **characterized in that** the fertilizer coulters (14) are at least partially located in the intermediate region (8) between the roller elements (5).

4. Combined agricultural device according to Claim 3, **characterized in that** the fertilizer and seed storage containers (12, 11) are in each case located above the soil cultivation implement (3) and upstream of the trailing roller (4).

5. Combined agricultural device according to Claim 1, **characterized in that** the fertilizer container (102) is arranged attached to the front of the tractor (105) pulling the combined agricultural device (101).

6. Combined agricultural device according to Claim 1, **characterized in that** the depth-guiding wheels (17) of the sowing coulters (13) extend into the intermediate space (8) between the roller elements at least by the extent of the flank height of the tyres (18) of the depth-guiding wheels (17).

7. Combined agricultural device according to Claim 1, **characterized in that** the combined agricultural device is designed as a pulled implement and has a traction device and a chassis, **in that** least some of the roller elements are designed as chassis elements.

8. Combined agricultural device according to Claim 1, **characterized in that** a narrow central roller element (109') is arranged on the supporting frame (106) in the centre of the combined agricultural device (101) between the trailing rollers (108) assigned to the respective side frames (107).

9. Combined agricultural device according to Claim 8, **characterized in that** the central roller element (109') is designed as a transport support wheel.

10. Combined agricultural device according to one or more of the preceding claims, **characterized in that** the central roller element (109') is arranged on the supporting frame (106) by a holding device (110) having a vertical pivot axis, and is freely pivotable about said axis at least in the folded-in position of the side frames.

11. Combined agricultural device according to Claim 8, **characterized in that** the central roller element (109') is arranged on the side frame by means of a pendulum wheel suspension.

12. Combined agricultural device according to one or more of the preceding claims, **characterized in that** the central roller element (109') is arranged so as to be adjustable in the vertical direction in relation to the supporting frame by means of a motorized adjustment device.

13. Combined agricultural device according to one or more of the preceding claims, **characterized in that** the pendulum wheel suspension is assigned a locking device by means of which the central roller element (109') is lockable in the working position of the side frames.

## Revendications

1. Machine agricole combinée composée d'un appareil pour travailler le sol et d'un cylindre suiveur suivant directement l'appareil pour travailler le sol et introduisant l'appareil pour travailler le sol dans la profondeur de travail du sol et comportant des éléments de cylindre, de préférence de type pneumatique, fixant rétroactivement le sol au moins dans des zones partielles et composée d'au moins une machine d'épandage associée réalisée de préférence sous la forme d'une machine à semer (graine par graine) avec au moins un récipient de réserve de semences et plusieurs socs de semoir disposés à une certaine distance les uns des autres, les éléments de cylindre étant disposés à une certaine distance les uns des autres, les socs de semoir étant disposés à l'aide d'étais articulés au niveau d'au moins une barre transversale de la machine agricole combinée, les semoirs (13, 14, 111) étant disposés dans les régions non fixées par les éléments de cylindre (5, 109, 109'), la barre transversale (7) étant disposée devant les éléments de cylindre (5, 109, 109'), les étais articulés (15, 16) prévus pour les semoirs (13, 14) s'étendant au moins en partie à travers la région intermédiaire (8) disposée entre les éléments de cylindre (5, 109, 109'), **caractérisée en ce que** des roues de guidage en profondeur (17) sont respectivement associées aux socs de semoir (13), que les roues de guidage en profondeur (17) s'étendent au-delà de l'espace intermédiaire (8) entre les éléments de cylindre (5, 109, 109') connexes les uns par rapport aux autres et s'étendent au moins avec leur région avant dans la région intermédiaire (8) prévue entre les éléments de cylindre (5, 109, 109') et fixent rétroactivement la région non fixée rétroactivement par les éléments de cylindre (5, 109, 109').

2. Machine agricole combinée selon la revendication 1, **caractérisée en ce que** le récipient de réserve de semences (11) se trouve au-dessus de l'appareil pour travailler le sol (3) et devant le cylindre suiveur (5).

3. Machine agricole combinée selon la revendication 1, la machine d'épandage comportant en outre une machine d'épandage d'engrais avec un réservoir d'engrais et plusieurs socs de distribution d'engrais (14) disposés à une certaine distance les uns des autres, **caractérisée en ce que** les socs de distribution d'engrais (14) se trouvent au moins en partie dans la région intermédiaire (8) entre les éléments de cylindre (5).

4. Machine agricole combinée selon la revendication 3, **caractérisée en ce que** les réservoirs d'engrais et de semences (12, 11) se trouvent respectivement au-dessus de l'appareil pour travailler le sol (3) et devant le cylindre suiveur (4).

5. Machine agricole combinée selon la revendication 1, **caractérisée en ce que** le récipient d'engrais (102) est disposé dans l'annexe avant au niveau du véhicule agricole (105) tractant la machine agricole combinée (101).

6. Machine agricole combinée selon la revendication 1, **caractérisée en ce que** les roues de guidage en profondeur (17) des socs de semoir (13) s'étendent au moins sur la hauteur de flanc des pneumatiques (18) des roues de guidage en profondeur (17) dans l'espace intermédiaire (8) prévu entre les éléments de cylindre.

7. Machine agricole combinée selon la revendication 1, **caractérisée en ce que** la machine agricole combinée est réalisée sous la forme d'un appareil tracté et comporte un dispositif de traction et un châssis, qu'au moins quelques-uns des éléments de cylindre sont réalisés sous la forme d'éléments de châssis.

8. Machine agricole combinée selon la revendication 1, **caractérisée en ce qu'**un élément à cylindres médian (109') étroit est disposé au milieu de la machine agricole combinée (101), au niveau du cadre porteur (106), entre les cylindres suiveurs (108) associés aux cadres latéraux (107) respectifs.

9. Machine agricole combinée selon la revendication 8, **caractérisée en ce que** l'élément à cylindres médian (109') est réalisé sous la forme d'une roue stabilisatrice pour le transport.

10. Machine agricole combinée selon l'une quelconque des revendications précédentes ou plusieurs d'entre elles, **caractérisée en ce que** l'élément à cylindres médian (109') est disposé au niveau du cadre porteur (106) avec un dispositif d'arrêt (110) comportant un axe de pivotement droit et peut pivoter librement autour de cet axe au moins dans la position rabattue des cadres latéraux.

11. Machine agricole combinée selon la revendication 8, **caractérisée en ce que** l'élément à cylindres médian (109') est disposé au niveau du cadre latéral au moyen d'une suspension de roue pendulaire.

12. Machine agricole combinée selon l'une quelconque des revendications précédentes ou plusieurs d'entre elles, **caractérisée en ce que** l'élément à cylindres médian (109') est disposé de façon à pouvoir être déplacé dans la direction verticale par rapport au cadre porteur, au moyen d'un dispositif de placement motorisé.

13. Machine agricole combinée selon l'une quelconque des revendications précédentes ou plusieurs d'entre elles, **caractérisée en ce qu'**un dispositif de verrouillage à l'aide duquel l'élément à cylindres médian (109') peut être verrouillé dans la position de travail des cadres latéraux est associé à la suspension de roue pendulaire.
